# NEUE EUROPÄISCHE PATENTSCHRIFT

(11) **EP 2 353 957 B2**
(45) Veröffentlichungstag und Bekanntmachung des Hinweises auf die Entscheidung über den Einspruch: **07.06.2023**
(45) Hinweis auf die Patenterteilung: 02.09.2020
(21) Anmeldenummer: 11150385.0
(22) Anmeldetag: 07.01.2011
(51) Int. Cl.: B60W 30/16, B60W 30/18

(54) **Verfahren und Vorrichtung zur Unterstützung eines Fahrers bei einem Überholvorgang**
Method and device for assisting a driver during an overtaking process
Procédé et dispositif destinés à assister un conducteur lors d'une action de dépassement

(30) Priorität: 14.01.2010 DE 102010004625
(43) Veröffentlichungstag der Anmeldung: 10.08.2011
(73) Patentinhaber: Ford Global Technologies, LLC, Dearborn, MI 48126-2701 (US)
(72) Erfinder: Kashi, Amin, 40629, Düsseldorf (DE); Nold, Pradeep, 50823 Köln (DE); Kappes, Stefan, 50259, Pulheim (DE); Grauers, Anders, 443 45, Partille (SE); Bak, Maciej, 85055 Ingolstadt (DE)
(74) Vertreter: Markowitz, Markus

(56) Entgegenhaltungen:
- EP-B1- 1 040 026
- DE-A1- 10 114 187
- DE-A1- 19 514 023
- DE-A1- 19 704 854
- DE-A1- 19 757 063
- DE-A1- 19 821 122
- DE-A1-102006 043 150

## Beschreibung

Die Erfindung betrifft ein Verfahren und eine Vorrichtung zur Unterstützung eines Fahrers bei einem Überholvorgang.

Überholvorgänge erfordern vom Fahrer eines Kraftfahrzeugs die Koordination einer Vielzahl unterschiedlicher Aufgaben. Hierzu gehören vor dem Beginn des Überholvorgangs insbesondere neben dem Einhalten einer Fahrspur das Einhalten eines Mindestabstands zum vorausfahrenden Fahrzeug und die Beobachtung des Verkehrs auf einer weiteren Fahrspur, die zum Überholen benötigt wird. Zur Entlastung des Fahrers beim Einhalten einer vorgegebenen Geschwindigkeit und beim Folgen eines vorausfahrenden Fahrzeugs unter Beachtung eines Mindestabstands sind Geschwindigkeits- und Abstandsregelungsverfahren entwickelt worden, bei denen aufgrund von durch ein Sensorsystem erfassten Daten Beschleunigung und Verzögerung des Kraftfahrzeugs derart geregelt werden, dass Geschwindigkeit und/oder Abstand zum vorausfahrenden Fahrzeug innerhalb eines vorgebbaren Bereichs konstant gehalten werden. Insbesondere sind abstandsbezogene Fahrgeschwindigkeits-Regelsysteme bekannt, bei denen die Regelung dann auf eine vorgegebene Geschwindigkeit regelt, wenn vom Sensorsystem kein nahe vorausfahrendes Fahrzeug erkannt wird, und die Regelung dann auf einen vorgegebenen Abstand regelt, wenn ein solches Fahrzeug in einem entsprechenden Abstandsbereich erkannt worden ist.

Bei einem Überholvorgang ist ein Eingriff in eine solche Regelung notwendig, weil die Abstandsregelung sonst erst dann ein Beschleunigen zulassen würde, wenn sich das zu überholende Fahrzeug vollständig außerhalb des Fahrwegs befindet oder nicht mehr vom Sensorsystem erfasst wird. Andererseits wird üblicherweise die Beschleunigung für den Überholvorgang vom Fahrer bereits vor einem Spurwechsel eingeleitet, um den Überholvorgang in kürzerer Zeit abschließen zu können bzw. um sich besser in den schneller fließenden Verkehr auf der Überholspur einordnen zu können. Im Interesse eines harmonischen und zügigen Überholvorgangs, dessen Ablauf der Fahrweise eines menschlichen Fahrers entspricht, ist daher eine Anpassung der automatischen Geschwindigkeits- und Abstandsregelung wünschenswert, sobald die Absicht des Fahrers zum Überholen erkennbar ist.

Aus der DE 42 00 694 A1 ist es bekannt, die Abstandsregelung für einen vorgebbaren Zeitraum zu unterbrechen, wenn der Fahrer beispielsweise durch Betätigen des Fahrtrichtungsanzeigers die Absicht zum Überholen zu erkennen gibt. Dies hat den Nachteil, dass die automatische Abstandsregelung, die die Einhaltung eines Sicherheitsabstands zum vorausfahrenden Fahrzeug gewährleistet, während dieses Zeitraums außer Funktion ist.

Wie in der EP 1 037 760 A1 beschrieben, kann vor einem Überholvorgang der für die Abstandsregelung vorgegebene Sollwert für den Abstand zum vorausfahrenden Fahrzeug bis auf einen minimal zulässigen Abstand verringert werden. Erkennt das System eine Kollisionsgefahr, wird der Überholvorgang abgebrochen und das Fahrzeug ggf. abgebremst.

Gemäß der DE 197 57 063 wird bereits beim Betätigen des Fahrtrichtungsanzeigers, der einen Spurwechselwunsch zum Überholen anzeigt, die Fahrgeschwindigkeit angehoben und der Abstand zum vorausfahrenden Fahrzeug verringert.

Aus der US 6 842 687 B1 ist ein Verfahren zur Unterstützung des Fahrers eines Kraftfahrzeugs bei einem Überholvorgang bekannt, bei dem der Abstand zu einem auf der gleichen Fahrspur vorausfahrenden Fahrzeug und zu einem auf der Überholspur unmittelbar vorausfahrenden Fahrzeug gemessen werden. Wenn ein Überholwunsch des Fahrers erkannt wird, wird eine Überholgeschwindigkeit berechnet und der stationären Abstandsregelung eine Regelung auf die Überholgeschwindigkeit überlagert. Bei den vorgenannten Verfahren wird eine der Abstands- und/oder Geschwindigkeitsregelung entsprechende Beschleunigung eingesetzt; diese ist jedoch in der Regel aus Gründen des Fahrkomforts und der Sparsamkeit eher niedrig angesetzt. Hierdurch ist keine optimale Durchführung des Überholvorgangs möglich; zudem unterscheidet sich ein solcher Ablauf insoweit von der Fahrweise eines menschlichen Fahrers, als dieser zum Überholen eine deutlich erhöhte Beschleunigung einsetzen würde.

In der DE 197 04 854 A1 ist ein Verfahren zur Regelung der Längsdynamik eines Fahrzeugs offenbart, wobei zur Regelung der Längsdynamik und zur Sollwertermittlung die Blinkerbetätigung des Fahrzeugs überwacht wird. Wird eine Blinkerbetätigung nach links festgestellt, kann ein Sollabstand zu einem vorausfahrenden Fahrzeug verringert und/oder eine Relativgeschwindigkeit zu diesem oder eine Sollbeschleunigung erhöht werden. Dabei kann die Modifikation der Sollwerte so ausgestaltet sein, dass diese bei anhaltend gesetztem Blinker im Laufe der Zeit wieder auf ihre ursprünglichen Werte zurückgeführt werden. -

Aus der EP 1 040 026 B1 sind ein Verfahren und eine Vorrichtung zur Unterstützung eines Fahrers eines Kraftfahrzeugs bei einem Überholvorgang bekannt.

Eine Aufgabe der vorliegenden Erfindung besteht darin, ein Verfahren bzw. eine Vorrichtung zur Unterstützung des Fahrers eines Kraftfahrzeugs bei einem Überholvorgang zu schaffen, bei dem bzw. bei der die vorstehend diskutierten Nachteile nicht auftreten.

Diese Aufgabe wird durch ein Verfahren sowie durch eine Vorrichtung wie in den unabhängigen Ansprüchen angegeben gelöst.

Das erfindungsgemäße Verfahren geht aus von einem Verfahren zur Regelung eines Abstands eines Kraftfahrzeugs zu einem vorausfahrenden Fahrzeug, insbesondere von einem Verfahren zur Geschwindigkeits- und Abstandsregelung bzw. einer abstandsbezogenen Geschwindigkeitsregelung. Verfahren dieser Art sind an sich bekannt und werden beispielsweise als "automatic cruise control" (ACC) oder auch insbesondere als "adaptive cruise control" bezeichnet.

Bei derartigen Verfahren wird ein Sollabstand vorgegeben, auf den der von einem Sensorsystem gemessene Abstand zu einem vorausfahrenden Fahrzeug geregelt wird. Hierfür wird laufend bzw. mit einer Taktfrequenz des Systems der aktuelle Abstand zu einem vorausfahrenden Fahrzeug gemessen und mit dem Sollabstand verglichen. Ist der aktuelle Abstand geringer als der Sollabstand, werden Maßnahmen zur Vergrößerung des Abstands ergriffen; insbesondere kann die Geschwindigkeit durch Eingriff in die Antriebssteuerung verringert werden. In Abhängigkeit vom aktuellen Abstand, der Relativgeschwindigkeit zum vorausfahrenden Fahrzeug und weiteren Parametern und Messgrößen, wie etwa der aktuellen Geschwindigkeit, kann auch das Bremssystem des Kraftfahrzeugs aktiviert werden. Ist der aktuelle Abstand größer als der Sollabstand, kann die Geschwindigkeit des Kraftfahrzeugs durch Eingriff in die Antriebssteuerung erhöht werden. Ist der Abstand deutlich größer als der Sollabstand oder ist kein vorausfahrendes Fahrzeug im Detektionsbereich des Sensorsystems, so kann eine ausschließliche Regelung der Geschwindigkeit auf eine Sollgeschwindigkeit erfolgen (Geschwindigkeitsregelungsmodus); bei Annäherung an ein vorausfahrendes langsameres Fahrzeug setzt die Regelung auf den Sollabstand ein, die Sollgeschwindigkeit wird dann nicht mehr erreicht, ebenso wenn des Kraftfahrzeug dem vorausfahrenden Fahrzeug im Sollabstand folgt (Folgemodus).

Dabei kann der Sollabstand insbesondere vom Fahrer vorgegeben werden oder von einer Steuerungseinrichtung ermittelt werden, beispielsweise mit Hilfe einer Rechenanweisung oder aus einer vorgegebenen Tabelle in Abhängigkeit von anderen Parametern und Messgrößen. Insbesondere kann der Sollabstand durch die Sollzeitlücke angegeben werden, d.h., durch die Zeit, die das Kraftfahrzeug braucht, um den Sollabstand zurückzulegen; diese ist mit dem Sollabstand durch die aktuelle Geschwindigkeit des Kraftfahrzeugs verknüpft. Hierfür sind auch gesetzliche und durch die Fahrsicherheit bestimmte Vorgaben zu berücksichtigen. Das gleiche gilt für die vorgebbare Sollgeschwindigkeit. Die Art und das Ausmaß der Reaktion der Regelung auf eine Abweichung des aktuellen Abstands bzw. der aktuellen Geschwindigkeit vom jeweiligen Sollwert hängen - je nach Auslegung des Reglers - insbesondere von der Größe der Abweichung, aber auch von weiteren Parametern ab. In der Regel lassen Geschwindigkeits- und Abstandsregelsysteme stets Eingriffe des Fahrers zu.

Erfindungsgemäß wird der Abstand des Kraftfahrzeugs zu einem vorausfahrenden Fahrzeug automatisch auf einen ersten Sollabstand d₁ geregelt; wenn sich das Kraftfahrzeug noch in einem wesentlich größeren Abstand zum vorausfahrenden Fahrzeug befindet, kann ggf. noch die Geschwindigkeitsregelung eingreifen und die Geschwindigkeit auf eine Sollgeschwindigkeit regeln. Um den Abstand zum vorausfahrenden Fahrzeug zu verringern bzw. die Geschwindigkeit des Kraftfahrzeugs zu erhöhen, steht dabei eine erste Beschleunigung a₁ zur Verfügung. Durch Eingriff in die Antriebssteuerung wird das Kraftfahrzeug höchstens mit der Beschleunigung a₁ beschleunigt; abhängig insbesondere von der aktuellen Abweichung vom Sollwert kann die aktuelle Beschleunigung auch geringer sein als a₁, oder die Beschleunigung kann entsprechend einer vordefinierten Rampe allmählich zunehmen, maximal bis auf a₁. Dererste Sollabstand d₁ und die erste Beschleunigung a₁ sind dabei bevorzugt so gewählt, dass die Regelung im Geschwindigkeitsregelungsmodus bzw. im Folgemodus ein komfortables und sparsames Fahren ermöglicht.

Wird nun zu einem Startzeitpunkt tₛ festgestellt, dass der Fahrer beabsichtigt, das vorausfahrende Fahrzeug zu überholen, so wird der Abstand zum vorausfahrenden Fahrzeug auf einen zweiten, gegenüberdem ersten Sollabstand d₁ geringeren Sollabstand geregelt. Hierfürwird in der Abstandsregelung der Sollabstand bevorzugt unmittelbar nach Detektion der Überholabsicht, d.h. nach Ausführung notwendiger Rechenoperationen oder ggf. Erfassung und Verarbeitung von Messwerten, auf den geringeren Wert d₂ gesetzt. Es kann aber auch der Sollabstand erst mit einer vorgegebenen Verzögerung oder auch allmählich verändert werden. Der zweite Sollabstand d₂ ist bevorzugt derart bemessen, dass der notwendige Sicherheitsabstand auf jeden Fall gewahrt bleibt. Dieser Wert ist jedoch geringer als der erste Sollabstand d₁, auf den im Folgemodus geregelt wird. Der geringere Abstand dient dazu, den Überholvorgang schneller abschließen zu können. Dies entspricht auch der üblichen Fahrweise beim Überholen.

Erfindungsgemäß wird nach der Detektion der Überholabsicht gleichzeitig mit der Verringerung des Sollabstands oder zu einem demgegenüber späteren Zeitpunkt eine zweite, gegenüber der ersten Beschleunigung a₁ erhöhte Beschleunigung a₂ bereitgestellt. Die erhöhte Beschleunigung a₂ steht insbesondere zur Verfügung, um bei einer abstandsbezogenen Geschwindigkeitsregelung auf die Sollgeschwindigkeit, die größer ist als die Geschwindigkeit des vorausfahrenden Fahrzeugs, zu regeln. Dies bedeutet, dass nach Erkennung der Überholabsicht ein schnelleres Beschleunigen möglich ist als während des Geschwindigkeitsregelungsmodus oder während des Folgemodus. Sobald die Überholabsicht detektiert worden ist, wird daher eine Beschleunigung erfolgen, da die Regelung auf den verringerten Sollabstand d₂ regelt und die Geschwindigkeit des Kraftfahrzeugs erhöht. Sobald die erhöhte Beschleunigung a₂ zur Verfügung steht, wird das Kraftfahrzeug stärker beschleunigt werden. Hierdurch ist eine zügige Durchführung des Überholvorgangs und ggf. ein leichteres Einordnen in den schnelleren Verkehr auf der Überholspur möglich. Zusammen mit der Annäherung an das vorausfahrende Fahrzeug kann hierdurch ein zügiger Ablauf des Überholvorgangs gewährleistet werden, der die Fahrweise eines menschlichen Fahrers nachbildet. Dabei bleibt die Einhaltung eines minimalen Abstands, insbesondere eines notwendigen Sicherheitsabstands, zum vorausfahrenden Fahrzeug gewährleistet. Durch den automatischen Ablauf des Verfahrens, der durch die detektierbare Überholabsicht des Fahrers ausgelöst wird, wird der Fahrer somit beim Überholen von einer Vielzahl von Aufgaben entlastet.

Erfindungsgemäß wird die zweite, erhöhte Beschleunigung a₂ nur dann bereitgestellt, wenn innerhalb eines vorgebbaren Zeitraums Δt nach dem Startzeitpunkt tₛ die Einleitung eines Spurwechsels detektiert wird. Für die Erhöhung der Geschwindigkeit, die für die Verringerung des Abstands zum vorausfahrenden Fahrzeug erforderlich ist, steht daher zunächst nur die Beschleunigung a₁ zur Verfügung, die während des Geschwindigkeitsregelungs- oder Folgemodus bereitgestellt wird, um auf Abweichungen des Abstands bzw. der Geschwindigkeit vom jeweiligen Sollwert zu reagieren. Hierdurch wird nach Erkennen der Überholabsicht des Fahrers eine Annäherung an das vorausfahrende Fahrzeug mit relativ geringer Beschleunigung und, entsprechend der Einstellung des Reglers, relativ geringer Differenzgeschwindigkeit zum vorausfahrenden Fahrzeug erzielt. Erst dann, wenn innerhalb des Zeitraums Δt nach dem Startzeitpunkt tₛ ein Spurwechsel eingeleitet wird, steht die zweite, gegenüber der ersten Beschleunigung a₁ erhöhte Beschleunigung a₂ zur Verfügung. Diese wird erfindungsgemäß unmittelbar nach Detektion der Einleitung des Spurwechsels bereitgestellt, d. h. nach Ausführung notwendiger Rechenoperationen oder ggf. Erfassung und Verarbeitung von Messwerten. Dabei ist der Zeitraum Δt bevorzugt derart gewählt, dass unter typischen Bedingungen innerhalb dieses Zeitraums ein Spurwechsel eingeleitet werden muss, um aus der Beschleunigung zur Annäherung an das vorausfahrende Fahrzeug in die erhöhte Beschleunigung zum Einleiten des eigentlichen Überholvorgangs überzugehen. Der Zeitraum Δt kann dabei beispielsweise 8 Sekunden betragen, was sich als günstig für eine Vielzahl von Fahrsituationen erwiesen hat. Δt kann aber auch von verschiedenen Messwerten und Parametern abhängig sein, beispielsweise von der aktuellen Geschwindigkeit, vom Abstand und der Relativgeschwindigkeit zum vorausfahrenden Fahrzeug, von den Sollabständen d₁ und d₂ und den Beschleunigungen a₁ und a₂. Die erhöhte Beschleunigung a₂ steht insbesondere zur Verfügung, um bei einer Geschwindigkeits- und Abstandsregelung auf die Sollgeschwindigkeit, die größer ist als die Geschwindigkeit des vorausfahrenden Fahrzeugs, zu regeln, wenn dieses nach Einleitung des Spurwechsels und insbesondere nach dem Spurwechsel auf eine Überholspur nicht mehr als vorausfahrendes Fahrzeug erkannt wird bzw. nicht mehr auf der gleichen Spur vorausfährt. In diesem Fall ist die Abstandsregelung nicht mehr aktiv bzw. regelt auf einen neuen Sollabstand zu einem auf der Überholspur vorausfahrenden Fahrzeug.

Dadurch, dass erst nach Einleitung eines Spurwechsels und damit erstfürdie Durchführung des eigentlichen Überholvorgangs die erhöhte Beschleunigung zur Verfügung steht, ist eine besonders sichere und zügige Durchführung des Überholvorgangs möglich. Insbesondere wird vermieden, dass bei ausbleibendem Spurwechsel - etwa weil der Fahrer den Uberholvorgang abbricht - ein abruptes Abbremsen zur Einhaltung des minimalen Abstands erfolgt. Zusammen mit der vorher erfolgten Annäherung an das vorausfahrende Fahrzeug kann hierdurch ein besonders harmonischer, komfortabler und zügiger Ablauf von Überholvorgängen gewährleistet werden, der die Fahrweise eines menschlichen Fahrers nachbildet. Gemäß einer bevorzugten Ausführungsform des erfindungsgemäßen Verfahrens wird der Abstand zum vorausfahrenden Fahrzeug wieder auf den ersten Sollabstand d₁ geregelt, wenn innerhalb des vorgebbaren Zeitraums Δt nach dem Startzeitpunkt tₛ keine Einleitung eines Spurwechsels detektiert worden ist. Hierdurch wird die Fortführung des Folgemodus mit dem dafür geltenden Sollabstand gewährleistet, wenn der Fahrer trotz Überholabsicht den eigentlichen Überholvorgang nicht eingeleitet hat, beispielsweise weil auf der Überholspur entgegen der ursprünglichen Einschätzung keine ausreichende Lücke vorhanden war.

Erfindungsgemäß ist vorgesehen, dass die nach Detektion der Einleitung eines Spurwechsels bereitgestellte zweite, erhöhte Beschleunigung a₂ höchstens für ein Zeitintervall Δtₐ bereitgestellt wird und danach wieder lediglich die erste, geringere Beschleunigung a₁ zur Verfügung steht. Hierdurch kann eine übermäßige Beschleunigung, die den Fahrkomfort und das Sicherheitsempfinden der Insassen beeinträchtigen könnte, vermieden werden. Das Zeitintervall Δtₐ ist dabei bevorzugt derart bemessen, dass innerhalb dieses Zeitintervalls die erhöhte Beschleunigung a₂ ausreicht, um in typischen Situationen eine für den Überholvorgang bereits weitgehend ausreichende Geschwindigkeit zu erreichen bzw. sich an die für die Geschwindigkeitsregelung geltende Sollgeschwindigkeit anzunähern. Für den weiteren Verlauf des Überholvorgangs nach Ablauf des Zeitintervalls Δtₐ, insbesondere für die weitere Beschleunigung bis zum Erreichen der Sollgeschwindigkeit wird von der Regelung wieder die erste Beschleunigung a₁ zugrunde gelegt. Δtₐ kann insbesondere 3 Sekunden betragen, was sich als günstig für eine Vielzahl von Fahrsituationen erwiesen hat. Δt kann aber auch von verschiedenen Messwerten und Parametern abhängig sein, beispielsweise von der aktuellen Geschwindigkeit, vom Abstand und der Relativgeschwindigkeit zum zu überholenden Fahrzeug, von den Sollabständen d₁ und d₂, den Beschleunigungen a₁ und a₂ oder auch von der aktuell erzielbaren Beschleunigung in Abhängigkeit von der Motorleistung, von der gewählten Übersetzung, von der Beladung, der aktuellen Steigung bzw. dem Gefälle der Straße usw.

Gemäß einer weiteren bevorzugten Ausführungsform wird höchstens einmal während des Zeitraums Δt nach dem Startzeitpunkt tₛ die zweite, erhöhte Beschleunigung a₂ bereitgestellt. Dies bedeutet, dass auch bei einer weiteren Detektion der Einleitung eines Spurwechsels innerhalb des Zeitraums Δt die erhöhte Beschleunigung a₂ nicht nochmals für ein weiteres Zeitintervall Δtₐ zur Verfügung steht und auch das Zeitintervall, innerhalb dessen die erhöhte Beschleunigung a₂ bereitgestellt wird, nicht durch eine erneute Detektion der Einleitung eines Spurwechsels innerhalb des Zeitraums Δtₐ verlängert werden kann. Die erhöhte Beschleunigung a₂ steht erst dann wieder zur Verfügung, wenn nach Ablauf des Zeitraums Δt nach dem Startzeitpunkt tₛ erneut eine Überholabsicht des Fahrers detektiert wird und somit ein neuer Startzeitpunkt gesetzt wird. Hierdurch wird die Betriebssicherheit des Verfahrens erhöht.

Gemäß einerweiteren, besonders bevorzugten Ausführungsform des erfindungsgemäßen Verfahrens werden erste Indikatoren zur Detektion einer Überholabsicht des Fahrers erfasst, wobei die ersten Indikatoren die Betätigung des Fahrtrichtungsanzeigers in einer vorgegebenen Richtung umfassen. Die vorgegebene Richtung ist dabei bevorzugt diejenige Richtung, bei der die Betätigung des Fahrtrichtungsanzeigers für eine Überholabsicht spricht und nicht beispielsweise für ein Abbiegen oder Anhalten. Diese Richtung kann insbesondere länderspezifisch vorgegeben werden, beispielsweise in Ländern mit Rechtsverkehr ist dies die Betätigung des Fahrtrichtungsanzeigers nach links. Zur Detektion der Überholabsicht des Fahrers können zusätzlich weitere Indikatoren, wie etwa die Blickrichtung des Fahrers, herangezogen werden. Die Erfassung der Indikatoren, beispielsweise der Stellung des Fahrtrichtungsanzeigers, erfolgt bevorzugt laufend, d.h., in Echtzeit bzw. entsprechend der Verarbeitungsgeschwindigkeit in einer Steuerungseinrichtung. Dadurch, dass auf diese Weise zur Detektion der Überholabsicht des Fahrers die Betätigung von im Kraftfahrzeug vorhandenen Bedienelementen ausgenutzt wird, wird eine einfache und intuitive Anwendung des Verfahrens ermöglicht.

Weiterhin ist es bevorzugt, dass nur dann eine Überholabsicht des Fahrers detektiert wird, wenn die aktuelle Geschwindigkeit des Kraftfahrzeugs größer ist als ein vorgebbarer Grenzwert Vmin, beispielsweise größer als 65 km/h. Nur bei einer solchen Geschwindigkeit kann mit genügender Sicherheit davon ausgegangen werden, dass beispielsweise eine Betätigung des Fahrtrichtungsanzeigers durch den Fahrer eine Überholabsicht anzeigt.

Gemäß einer weiteren besonders bevorzugten Ausführungsform des erfindungsgemäßen Verfahrens werden zweite Indikatoren zur Detektion der Einleitung eines Spurwechsels erfasst. Die zweiten Indikatoren können eine oder mehrere der folgenden gemessenen oder berechneten Größen umfassen: Lenkwinkel, Lenkwinkelgeschwindigkeit, Zeitintegral des Lenkwinkels, Gierrate und/oder laterale Beschleunigung des Kraftfahrzeugs. Sowohl Lenkwinkel bzw. Lenkradeinschlag als auch dessen zeitliche Veränderung und zeitliches Integral stellen eine Aktion des Fahrers dar, mit Hilfe derer der Fahrer den Spurwechsel veranlasst. Die Winkelgeschwindigkeit der Gierbewegung und die seitliche Beschleunigung, die das Kraftfahrzeug erfährt, stellen die Reaktionen des Kraftfahrzeugs auf die Aktion des Fahrers dar und können daher ebenfalls als Indikatoren für den Spurwechsel, insbesondere als Bestätigung für die Einleitung des Spurwechsels durch die Lenkbewegung dienen. Die genannten Größen werden bevorzugt in Echtzeit bzw. entsprechend der Erfassungsrate und der Verarbeitungsgeschwindigkeit einer Steuerungseinrichtung erfasst bzw. berechnet. Die Erfassung der Einleitung des Spurwechsels durch derartige Indikatoren ermöglicht eine besonders einfache und intuitive Anwendung des Verfahrens.

Weiterhin ist es bevorzugt, dass nur dann die Einleitung eines Spurwechsels detektiert wird, wenn der Fahrtrichtungsanzeiger gesetzt ist, insbesondere in einer vorgegebenen Richtung, die eine Überholabsicht erkennen lässt. Hierdurch ist auf einfache Weise eine Unterscheidung eines Spurwechsels von einer Kurvenfahrt möglich.

Gemäß einer weiteren bevorzugten Ausführungsform wird eine erste Sicherheitsfunktion S1 berechnet, und der Abstand zum vorausfahrenden Fahrzeug wird nur dann auf den zweiten, geringeren Sollabstand d₂ geregelt, wenn der aktuelle Wert der ersten Sicherheitsfunktion in einem für die erste Sicherheitsfunktion vorbestimmten Bereich liegt. Gemäß einer weiteren bevorzugten Ausführungsform wird eine zweite Sicherheitsfunktion S2 berechnet und nur dann die zweite, erhöhte Beschleunigung a₂ bereitgestellt, wenn der aktuelle Wert der zweiten Sicherheitsfunktion in einem für die zweite Sicherheitsfunktion vorbestimmten Bereich liegt. Hierdurch kann eine Berücksichtigung sicherheitsrelevanter Messwerte und Parameter erfolgen, die ggf. ein Überholen oder auch schon die Verringerung des Abstands zum vorausfahrenden Fahrzeug bzw. einen Spurwechsel kritisch erscheinen lassen.

Für die Berechnung der ersten und/oder der zweiten Sicherheitsfunktion können in bevorzugter Weise insbesondere eine oder mehrere der folgenden gemessenen oder berechneten Größen ausgewertet werden: Die aktuelle Geschwindigkeit des Kraftfahrzeugs, die Winkelgeschwindigkeit des Kraftfahrzeugs bezüglich beliebiger Achsen, der aktuelle Abstand zum vorausfahrenden Fahrzeug, die Veränderungsgeschwindigkeit des Abstands zum vorausfahrenden Fahrzeug und/oder die Gierrate. Hierdurch ist eine sichere Erkennung von fahrdynamischen Situationen möglich, die ein Überholen ausschließen.

Gemäß einer weiteren Ausführungsform der Erfindung wird eine Überholabbruchabsicht des Fahrers detektiert, beispielsweise durch Rücksetzen des Fahrtrichtungsanzeigers. In diesem Fall wird der Abstand zum vorausfahrenden Fahrzeug wieder auf den ersten Sollabstand d₁ geregelt und die erste Beschleunigung a₁ bereitgestellt. Erst bei darauf folgender erneuter Detektion einer Überholabsicht wird erneut auf den verringerten Sollabstand d₂ geregelt. Hierdurch wird dem Fahrer jederzeit eine intuitive Einflussnahme auf den Ablauf des Verfahrens ermöglicht. In einer Ausführungsform ist eine erneute Detektion der Überholabsicht erst nach Ablauf der Zeit Δt nach der vorangegangenen Detektion einer Überholabsicht möglich; die führt zu einer erhöhten Sicherheit gegen Fehlbedienungen. Ferner kann es aus Sicherheitsgründen vorgesehen sein, dass der Fahrer jederzeit in den Ablauf des Verfahrens eingreifen und dieses insbesondere jederzeit abbrechen kann.

Eine erfindungsgemäße Vorrichtung umfasst Sensormittel zur Erfassung des Abstands des Kraftfahrzeugs zu einem vorausfahrenden Fahrzeug sowie ggf. weiterer Messgrößen, beispielsweise der aktuellen Geschwindigkeit des Kraftfahrzeugs, Mittel zur Detektion einer Überholabsicht des Fahrers, Mittel zur Detektion der Einleitung eines Spurwechsels und Steuerungsmittel zur Regelung eines Abstands zu einem vorausfahrenden Kraftfahrzeug. Die Steuerungsmittel sind dabei zur Durchführung des Verfahrens nach vorstehender Beschreibung ausgebildet. Die Steuerungsmittel können auch Speichermittel zur Speicherung der notwendigen Parameter und Messwerte sowie Eingabemittel beispielsweise zur Eingabe einer Sollgeschwindigkeit umfassen.

Die Erfindung wird nachfolgend anhand der Zeichnungen beispielhaft näher erläutert. Es zeigen:
- Fig. 1: ein vereinfachtes Blockdiagramm zum Ablauf eines Ausführungsbeispiels des erfindungsgemäßen Verfahrens;
- Fig. 2a und 2b: den zeitlichen Verlauf von Abstand, Geschwindigkeit und Beschleunigung gemäß einem Ausführungsbeispiel des erfindungsgemäßen Verfahrens;
- Fig. 3a bis 3c: in Draufsicht die Fahrsituation in verschiedenen Phasen gemäß einem Ausführungsbeispiel des erfindungsgemäßen Verfahrens;
- Fig. 4: einen symbolischen Schaltplan zur Realisierung einer erfindungsgemäßen Vorrichtung.

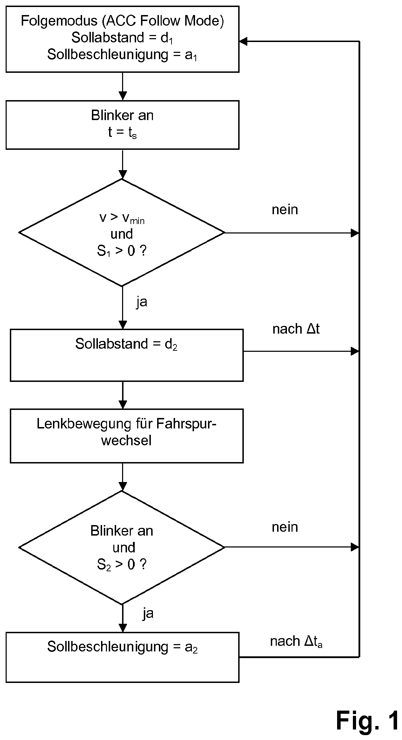

Gemäß Fig. 1 ist die Ausgangssituation bei einem Ausführungsbeispiel des erfindungsgemäßen Verfahrens der Folgemodus (ACC Follow Mode) einer Abstands- und Geschwindigkeitsregelung. In dieser Situation wird der aktuelle Abstand zu einem auf der gleichen Spur vorausfahrenden Fahrzeug laufend erfasst und an eine Steuerungseinrichtung übermittelt, die in die Motorsteuerung derart eingreift, dass der Abstand zum vorausfahrenden Fahrzeug im wesentlichen konstant gehalten wird. Der Sollwert für den Abstand ist d₁. Bei Abweichungen des aktuellen Abstands vom Sollwert steht maximal eine Sollbeschleunigung a₁ zur Änderung der Geschwindigkeit und somit zur Regelung des Abstands auf den Sollwert d₁ zur Verfügung.

Die Abstands- und Geschwindigkeitsregelung weist einen Überholassistenzmodus auf, in dem durch laufende Abfrage beispielsweise der Stellung der Fahrtrichtungsanzeiger eine Überholabsicht des Fahrers überwacht wird. Der Überholassistenzmodus kann im Folgemodus der Abstands- und Geschwindigkeitsregelung stets aktiv sein oder es kann notwendig sein, zusätzlich zum Folgemodus den Überholassistenzmodus zu aktivieren. Solange keine Überholabsicht detektiert worden ist, greift der Überholassistenzmodus jedoch noch nicht in die Abstands- und Geschwindigkeitsregelung ein ("standby").

Ist der Überholassistenzmodus im Standby-Betrieb und betätigt der Fahrer den Fahrtrichtungsanzeiger in derjenigen Richtung, die auf eine Überholabsicht hindeutet, so wird hierdurch die Überholabsicht detektiert. Dieser Zeitpunkt wird als Startzeitpunkt tₛ definiert. Nun wird im Überholassistenzmodus eine erste Phase eingeleitet.

In dieser ersten Phase wird zunächst überprüft, ob die aktuelle Geschwindigkeit größer oder gleich einer vorgegebenen Mimimalgeschwindigkeit vₘᵢₙ ist, unterhalb derer die Betätigung der Fahrtrichtungsanzeiger nicht sicher genug auf eine Überholabsicht hindeutet, sondern beispielsweise auch die Absicht anzeigen kann, abzubiegen. Vorteilhafte Werte für die Mimimalgeschwindigkeit vₘᵢₙ sind beispielsweise etwa 50 km/h oder etwa 65 km/h. Bei einer kleineren Geschwindigkeit kehrt die Regelung zum Ausgangszustand zurück, nämlich dem durch die Parameter d₁ und a₁ gekennzeichneten Folgemodus. Ebenso wird eine erste Sicherheitsüberprüfung durchgeführt, wobei insbesondere die Gierrate ausgewertet wird, um eine Kurvenfahrt festzustellen. Überschreitet die Gierrate einen vorgegebenen Schwellwert, so wird eine erste Sicherheitsfunktion auf den Wert 0 gesetzt, was die Regelung ebenfalls veranlasst, zum Ausgangszustand zurückzukehren. Andernfalls nimmt die erste Sicherheitsfunktion den Wert 1 an.

Ist die Geschwindigkeit größer oder gleich der Mimimalgeschwindigkeit vₘᵢₙ und hat die erste Sicherheitsfunktion den Wert 1, so wird der Sollabstand für die Abstandsregelung auf einen verringerten Abstand d₂ gesetzt. Die Abstände d₁ und d₂ bestimmen sich insbesondere nach Regelungs- und Sicherheitsgesichtspunkten. Es kann auch eine Zeitlücke vorgegeben sein, die die Zeit darstellt, die das Kraftfahrzeug bei der aktuellen Geschwindigkeit benötigt, um den Sollabstand d₁ bzw. d₂ zurückzulegen. So kann beispielsweise der Zeitabstand im Folgemodus 1,1 sec betragen, und nach Detektion der Überholabsicht auf 0,6 sec herabgesetzt werden. Hierbei können noch weitere fahrdynamische Größen verwendet werden.

Nach Ablauf einer Zeitspanne Δt, beispielsweise 8 sec, wird der Sollabstand wieder auf den ursprünglichen Wert d₁ zurückgesetzt, wenn innerhalb dieser Zeit kein Fahrspurwechsel eingeleitet worden ist. Die Regelung kehrt dann wieder zum Ausgangszustand, dem Folgemodus, zurück. Wird jedoch innerhalb dieser Zeitspanne das Lenkrad in einer Weise betätigt, die auf einen beabsichtigten Spurwechsel hindeutet, oder führt das Fahrzeug eine entsprechende Gierbewegung aus, so tritt der Überholassistenzmodus in eine zweite Phase ein.

In dieser zweiten Phase wird zunächst überprüft, ob der Fahrtrichtungsanzeiger noch gesetzt ist. Hat der Fahrer den Blinker ausgeschaltet oder in die andere Richtung gesetzt, so wird dies als Absicht erkannt, den Überholvorgang abzubrechen. In diesem Fall kehrt die Regelung zum Ausgangszustand zurück. Ebenso wird der Wert einer zweiten Sicherheitsfunktion ermittelt, die die für die Berechnung der ersten Sicherheitsfunktion verwendeten Größen enthalten kann, sowie ggf. weitere, wie beispielsweise die aktuelle Geschwindigkeit oder die Geschwindigkeit des Lenkradeinschlags. Ergibt sich daraus, dass ein Überholvorgang nicht sicher durchgeführt werden kann, so wird der Wert der zweiten Sicherheitsfunktion auf 0 gesetzt, und die Regelung kehrt ebenfalls zum Ausgangszustand zurück. Ist andererseits der Fahrtrichtungsanzeiger weiterhin gesetzt, und der Wert der Sicherheitsfunktion ist 1, so wird der Abstands- und Geschwindigkeitsregelung eine erhöhte Beschleunigung a₂ zur Verfügung gestellt. Nach Ablauf einer Zeit Δtₐ, beispielsweise 3 sec, kehrt die Regelung zum Ausgangszustand zurück.

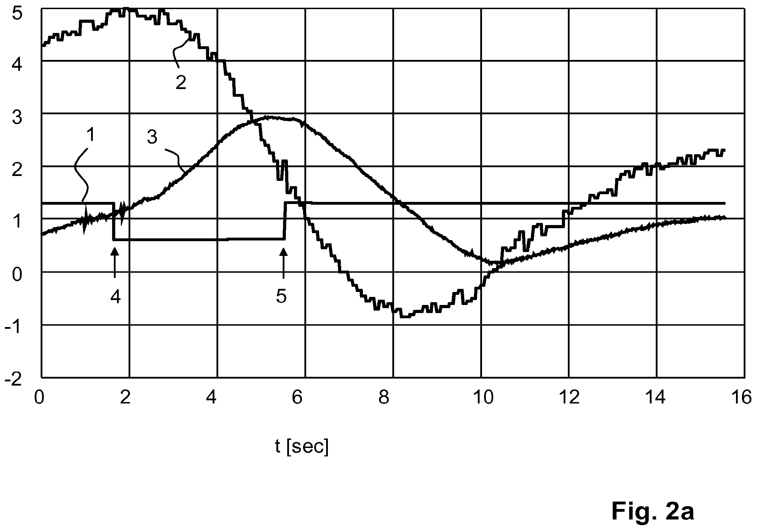

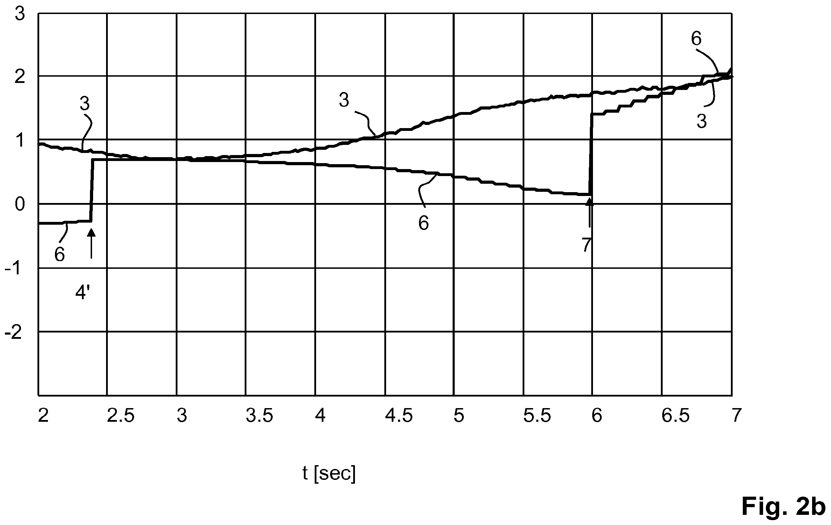

In Fig. 2a und 2b ist beispielhaft der zeitliche Verlauf des Sollabstands 1 zum vorausfahrenden Fahrzeug, des aktuellen Abstands 2 zum vorausfahrenden Fahrzeug (bezogen auf einen festen Abstand) und der aktuellen Geschwindigkeit 3 des Kraftfahrzeugs dargestellt. Dabei ist auf der Abszisse die Zeit aufgetragen. Auf der Ordinate sind die genannten Größen jeweils in willkürlichen Einheiten aufgetragen.

Zu dem mit dem Pfeil 4 gekennzeichneten Zeitpunkt wird gemäß Fig. 2a die Überholabsicht des Fahrers durch Betätigung des Fahrtrichtungsanzeigers erkannt und die erste Phase des Überholassistenzmodus eingeleitet. Nach der Überprüfung der Geschwindigkeit und der ersten Sicherheitsfunktion wird der Sollabstand 1 zum vorausfahrenden Fahrzeug verringert. Die Abstandsregelung greift nun in die Motorsteuerung ein und erhöht die Geschwindigkeit 3, wodurch der anfangs leicht zunehmende Abstand 2 zum vorausfahrenden Fahrzeug verringert wird. Gemäß Fig. 2a erfolgt jedoch kein Spurwechsel. Zu dem mit dem Pfeil 5 gekennzeichneten Zeitpunkt erfolgt beispielsweise ein Abbruch des Überholvorgangs durch den Fahrer durch Rücksetzen des Blinkers, oder eine vorgegebene Zeitspanne läuft ab. Der Sollabstand nimmt dann wieder den früheren Wert an, die Regelung kehrt zum Ausgangszustand zurück, und durch eine Verringerung der Geschwindigkeit 3 wird der frühere Abstandswert wieder angestrebt. Die für die Erhöhung und die Verringerung der Geschwindigkeit zur Verfügung stehende maximale Beschleunigung und Verzögerung entsprechen der im Folgemodus der Abstands- und Geschwindigkeitsregelung und sind relativ gering, so dass erst im weiteren Verlauf der Zeitachse der anfängliche Abstand wieder erreicht wird (nicht dargestellt).

Wie in Fig. 2b gezeigt, wird zu dem mit dem Pfeil 4' gekennzeichneten Zeitpunkt der Fahrtrichtungsanzeiger betätigt und die erste Phase des Überholassistenzmodus eingeleitet. Wie in Fig. 2a wird auch hier die Geschwindigkeit 3 erhöht, um den Abstand zum vorausfahrenden Fahrzeug zu verringern. Die hierfür zur Verfügung stehende Beschleunigung 6 ist relativ gering. Zu dem mit dem Pfeil 7 gekennzeichneten Zeitpunkt wird das Lenkrad bewegt, um auf die Überholspur zu wechseln. Die Bewegung des Lenkrads und/oder die entsprechende Gierbewegung des Kraftfahrzeugs wird detektiert und die zweite Phase des Überholassistenzmodus eingeleitet. Dabei kann eine Filterung und/oder eine Differentiation und/oder Integration der Lenkradstellung genutzt werden, um die Sicherheit der Erkennung eines Spurwechsels zu erhöhen. Nach Überprüfung der Blinkerstellung und der zweiten Sicherheitsfunktion steht nun eine wesentlich größere Beschleunigung 6 zur Verfügung, wie in Fig. 2b im rechten Bereich des Diagramms ersichtlich. Das Kraftfahrzeug reagiert auf die erhöhte Beschleunigung mit einer Geschwindigkeitszunahme, wie ebenfalls im rechten Bereich des Diagramms angedeutet.

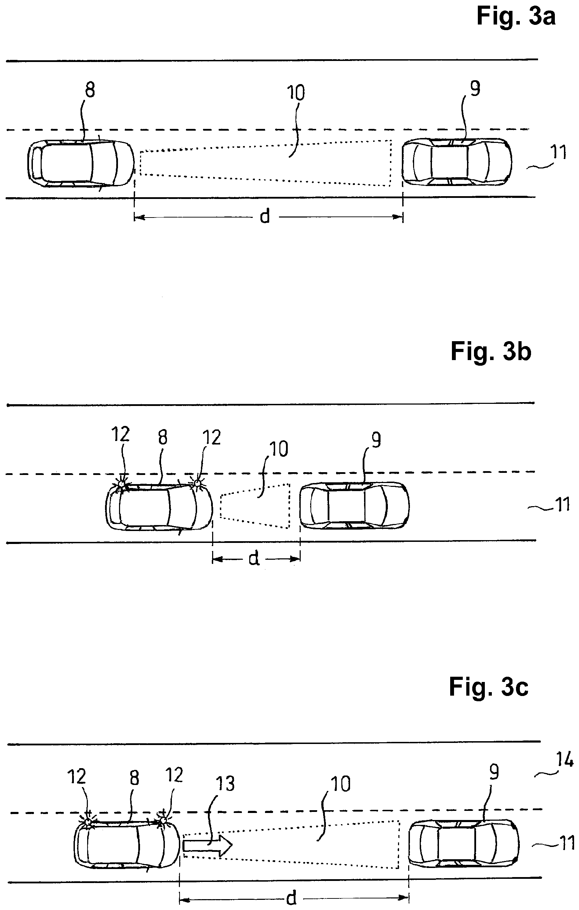

Fig. 3a zeigt die Verkehrssituation in der Ausgangssituation, nämlich im Folgemodus eines Abstands- und Geschwindigkeitsregelungssystems eines Kraftfahrzeugs 8. Das Abstands- und Geschwindigkeitsregelungssystem umfasst Sensormittel (nicht dargestellt) zur Erfassung des Abstands zu einem vorausfahrenden Fahrzeug 9, beispielsweise einen oder mehrere nach dem Radar- oder Lidarprinzip arbeitenden Sensoren. Der Messbereich 10 der Sensormittel ist im Wesentlichen in Fahrtrichtung gerichtet zur Erfassung von Hindernissen auf der aktuell befahrenen Fahrspur 11. Im Folgemodus wird von der Abstandsregelung derart in die Motorsteuerung eingegriffen, dass der Abstand d zwischen dem Kraftfahrzeug 8 und dem vorausfahrenden Fahrzeug 9 im Wesentlichen konstant bei einem ersten Sollabstand d₁ gehalten wird.

Wie in Fig. 3b dargestellt, wird durch Betätigung der Fahrtrichtungsanzeiger 12 die erste Phase des Überholassistenzmodus ausgelöst, in der der Abstand d zum vorausfahrenden Fahrzeug auf einen verringerten Sollwert d₂ geregelt wird. Dadurch wird das Fahrzeug mit der für den Folge- oder den Geschwindigkeitsregelungsmodus vorgesehenen Beschleunigung beschleunigt und der Abstand zum vorausfahrenden Fahrzeug verringert. Die erste Phase simuliert daher die Annäherung und Beschleunigung, die ein menschlicher Fahrer zur Vorbereitung eines Überholvorgangs durchführen würde. In dem in Fig. 3b dargestellten Fall ist trotz Betätigung der Fahrtrichtungsanzeiger kein Spurwechsel erfolgt.

Fig. 3c zeigt eine Fahrsituation, bei der ein Spurwechsel bereits kurze Zeit nach Beginn der ersten Phase des Überholassistenzmodus durch Einschlagen des Lenkrads in die gleiche Richtung, in der die Fahrtrichtungsanzeiger 12 gesetzt worden sind, ausgelöst worden ist. Der Abstand d des Kraftfahrzeugs 8 zum vorausfahrenden Fahrzeug 9 ist noch nicht wesentlich verringert worden, jedoch ist aufgrund der Detektion der Spurwechselabsicht eine erhöhte Beschleunigung zur Verfügung gestellt worden, wie durch den Pfeil 13 angedeutet. Aufgrund des Lenkradeinschlags wird das Kraftfahrzeug 8 eine Gierbewegung ausführen und dadurch einen Spurwechsel auf die Überholspur 14 vollziehen (nicht dargestellt). Die Überholspur 14 kann prinzipiell sowohl eine Spur einer mehrspurigen Richtungsfahrbahn wie auch eine Gegenfahrbahn sein. Die zweite Phase stellt die Beschleunigung zur Verfügung, mit der ein menschlicher Fahrer den Überholvorgang durchführen würde. Zusammen mit der Beschleunigung und ggf. der Annäherung in der ersten Phase ermöglicht dies einen sicheren, komfortablen und zügigen Überholvorgang.

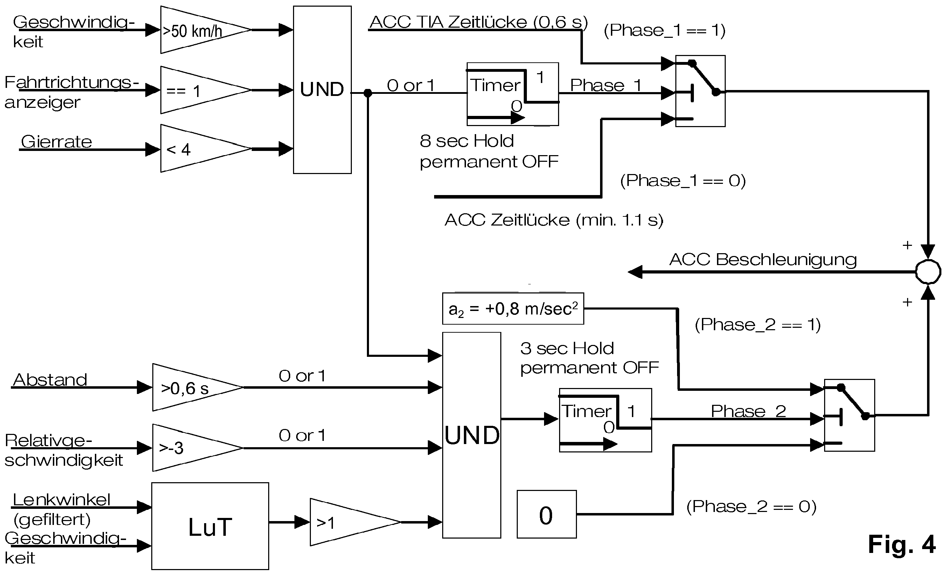

Fig. 4 zeigt beispielhaft einen symbolischen Schaltplan für einen Teil einer Steuerungseinrichtung zur Durchführung eines erfindungsgemäßen Verfahrens. Zur Einleitung der ersten Phase (in Fig. 4 "Phase_1") werden die aktuelle Geschwindigkeit, die Stellung der Fahrtrichtungsanzeiger und die Gierrate ausgewertet. Hierzu wird eine erste Sicherheitsfunktion berechnet, die die Werte 0 oder 1 annehmen kann. Hat die erste Sicherheitsfunktion den Wert 1, wird die erste Phase des Überholassistenzmodus eingeleitet. In diesem Fall wird die Zeitlücke des Überholassistenzmodus ("turn indicator assist", TIA) gewählt, beispielsweise 0,6 sec. Die erste Phase wird für maximal 8 sec aufrecht erhalten. Hat die erste Sicherheitsfunktion den Wert 0, wird die erste Phase nicht eingeleitet. In diesem Fall bleibt es bei einer Zeitlücke von mindestens 1,1 sec.

Zur Einleitung der zweiten Phase werden für eine zweite Sicherheitsfunktion die erste Sicherheitsfunktion, der Abstand, die Relativgeschwindigkeit, der Lenkwinkel und die Geschwindigkeit ausgewertet, die letzten beiden Größen mit Hilfe einer gespeicherten Tabelle ("Look-up Table", LuT). Ergibt die zweite Sicherheitsfunktion den Wert 1 und wird dementsprechend die zweite Phase eingeleitet, so wird eine erhöhte Beschleunigung a₂ zur Verfügung gestellt, hier 0,8 m/sec². Andernfalls sowie nach Ablauf von 3 sec wird keine erhöhte Beschleunigung bereitgestellt. Der jeweilige Beschleunigungswert wird an die Regelung (ACC) übermittelt.

### Bezugszeichenliste:

- 1: Sollabstand
- 2: Aktueller Abstand
- 3: Geschwindigkeit
- 4, 4': Pfeil
- 5: Pfeil
- 6: Beschleunigung
- 7: Pfeil
- 8: Kraftfahrzeug
- 9: Fahrzeug
- 10: Detektionsbereich
- 11: Fahrspur
- 12: Fahrtrichtungsanzeiger
- 13: Pfeil
- 14: Überholspur

## Patentansprüche

1. Verfahren zur Unterstützung eines Fahrers eines Kraftfahrzeugs (8) bei einem Überholvorgang, wobei:
ein Abstand des Kraftfahrzeugs (8) zu einem vorausfahrenden Fahrzeug (9) automatisch auf einen ersten Sollabstand d₁ unter Bereitstellung einer ersten Beschleunigung a₁ geregelt wird und
nach Detektion einer Überholabsicht des Fahrers zu einem Startzeitpunkt tₛ der Abstand zum vorausfahrenden Fahrzeug (9) auf einen zweiten, geringeren Sollabstand d₂ geregelt wird,
wobei nach Detektion der Überholabsicht des Fahrers eine zweite, erhöhte Beschleunigung a₂ bereitgestellt wird,
wobei die zweite, erhöhte Beschleunigung a₂ nur dann bereitgestellt wird, wenn innerhalb eines vorgebbaren Zeitraums Δt nach dem Startzeitpunkt tₛ die Einleitung eines Spurwechsels detektiert wird,
wobei die zweite, erhöhte Beschleunigung a₂ unmittelbar nach Detektion der Einleitung des Spurwechsels bereitgestellt wird,
**dadurch gekennzeichnet, dass**
die nach Detektion der Einleitung eines Spurwechsels bereitgestellte zweite, erhöhte Beschleunigung a₂ höchstens für ein Zeitintervall Δtₐ bereitgestellt wird und danach wieder die erste Beschleunigung a₁ bereitgestellt wird.

2. Verfahren nach Anspruch 1,
**dadurch gekennzeichnet, dass**
wenn innerhalb des vorgebbaren Zeitraums Δt nach dem Startzeitpunkt tₛ keine Einleitung eines Spurwechsels detektiert worden ist, der Abstand zum vorausfahrenden Fahrzeug (9) wieder auf den ersten Sollabstand d₁ geregelt wird.

3. Verfahren nach Anspruch 1 oder 2,
**dadurch gekennzeichnet, dass**
höchstens einmal während des Zeitraums Δt nach dem Startzeitpunkt tₛ die zweite, erhöhte Beschleunigung a₂ für das Zeitintervall Δtₐ bereitgestellt wird.

4. Verfahren nach einem der vorhergehenden Ansprüche,
**dadurch gekennzeichnet, dass**
erste Indikatoren zur Detektion einer Überholabsicht des Fahrers erfasst werden, wobei die ersten Indikatoren die Betätigung des Fahrtrichtungsanzeigers in einer vorgegebenen Richtung umfassen.

5. Verfahren nach einem der vorhergehenden Ansprüche,
**dadurch gekennzeichnet, dass**
nur dann eine Überholabsicht des Fahrers detektiert wird, wenn die Geschwindigkeit des Kraftfahrzeugs (8) größer ist als ein vorgebbarer Grenzwert, bevorzugt größer als 50 km/h oder 65 km/h.

6. Verfahren nach einem der vorhergehenden Ansprüche,
**dadurch gekennzeichnet, dass**
zweite Indikatoren zur Detektion der Einleitung eines Spurwechsels erfasst werden, wobei die zweiten Indikatoren eine oder mehrere der folgenden Größen umfassen: Lenkwinkel, Lenkwinkelgeschwindigkeit, Zeitintegral des Lenkwinkels, Gierrate, laterale Beschleunigung des Kraftfahrzeugs (8).

7. Verfahren nach einem der vorhergehenden Ansprüche,
**dadurch gekennzeichnet, dass**
nur dann die Einleitung eines Spurwechsels detektiert wird, wenn der Fahrtrichtungsanzeiger gesetzt ist.

8. Verfahren nach einem der vorhergehenden Ansprüche,
**dadurch gekennzeichnet, dass**
eine erste Sicherheitsfunktion berechnet wird und dass nur dann der Abstand zum vorausfahrenden Fahrzeug (9) auf den zweiten, geringeren Sollabstand d₂ geregelt wird, wenn der aktuelle Wert der ersten Sicherheitsfunktion in einem vorbestimmten Bereich liegt.

9. Verfahren nach einem der vorhergehenden Ansprüche,
**dadurch gekennzeichnet, dass**
eine zweite Sicherheitsfunktion berechnet wird und dass nur dann die zweite, erhöhte Beschleunigung a₂ bereitgestellt wird, wenn der aktuelle Wert der zweiten Sicherheitsfunktion in einem vorbestimmten Bereich liegt.

10. Verfahren nach Anspruch 8 oder 9,
**dadurch gekennzeichnet, dass**
für die Berechnung des aktuellen Werts der ersten bzw. zweiten Sicherheitsfunktion eine oder mehrere der folgenden Größen ausgewertet werden: Geschwindigkeit des Kraftfahrzeugs (8), Winkelgeschwindigkeit des Kraftfahrzeugs (8), Abstand zum vorausfahrenden Fahrzeug (9), Relativgeschwindigkeit zum vorausfahrenden Fahrzeug (9), Gierrate.

11. Verfahren nach einem der vorhergehenden Ansprüche,
**dadurch gekennzeichnet, dass**
nach Detektion einer Überholabbruchabsicht des Fahrers der Abstand zum vorausfahrenden Fahrzeug (9) auf den ersten Sollabstand d₁ geregelt und die erste Beschleunigung a₁ bereitgestellt wird.

12. Vorrichtung zur Durchführung eines Verfahrens zur Unterstützung eines Fahrers eines Kraftfahrzeugs (8) bei einem Überholvorgang, umfassend Sensormittel zur Erfassung des Abstands des Kraftfahrzeugs (8) zu einem vorausfahrenden Fahrzeug (9), Mittel zur Detektion einer Überholabsicht des Fahrers, Mittel zur Detektion der Einleitung eines Spurwechsels und Steuerungsmittel zur Regelung eines Abstands zu dem vorausfahrenden Fahrzeug (9), wobei die Steuerungsmittel zur Durchführung des Verfahrens nach einem der vorhergehenden Ansprüche eingerichtet sind.

## Claims

1. Method for assisting a driver of a motor vehicle (8) during overtaking, wherein:
a distance of the motor vehicle (8) from a vehicle (9) travelling ahead is adjusted automatically to a first setpoint distance d₁ by providing a first acceleration a₁, and
after an intention of the driver to overtake has been detected, the distance from the vehicle (9) travelling ahead is adjusted to a second, shorter setpoint distance d₂ at a starting time tₛ,
wherein after the intention of the driver to overtake has been detected, a second, increased acceleration a₂ is provided,
wherein the second, increased acceleration a₂ is provided only if the initiation of a lane change is detected within a predefinable time period Δt after the starting time tₛ,
wherein the second, increased acceleration a₂ is provided immediately after the initiation of the lane change has been detected,
**characterized in that**
the second, increased acceleration a₂ provided after the initiation of a lane change has been detected is provided at most for a time interval Δtₐ, and the first acceleration a₁ is then provided again after this.

2. Method according to Claim 1,
**characterized in that**
if initiation of a lane change has not been detected within the predefinable time period Δt after the starting time tₛ, the distance from the vehicle (9) travelling ahead is adjusted back to the first setpoint distance d₁.

3. Method according to Claim 1 or 2,
**characterized in that**
the second, increased acceleration a₂ is provided for the time interval Δtₐ at most once during the time period Δt after the starting time tₛ.

4. Method according to one of the preceding claims,
**characterized in that**
first indicators are registered for detecting an intention of the driver to overtake, wherein the first indicators comprise the activation of the travel direction indicator in a predefined direction.

5. Method according to one of the preceding claims,
**characterized in that**
an intention of the driver to overtake is detected only when the speed of the motor vehicle (8) is higher than a predefinable limit value, preferably higher than 50 km/h or 65 km/h.

6. Method according to one of the preceding claims,
**characterized in that**
second indicators are registered for detecting the initiation of a lane change, wherein the second indicators comprise one or more of the following variables: steering angle, steering angle speed, time integral of the steering angle, yaw rate, lateral acceleration of the motor vehicle (8).

7. Method according to one of the preceding claims,
**characterized in that**
the initiation of a lane change is detected only when the travel direction indicator is set.

8. Method according to one of the preceding claims,
**characterized in that**
a first safety function is calculated, and the distance from the vehicle (9) travelling ahead is adjusted to the second, shorter setpoint distance d₂ only when the current value of the first safety function lies in a predetermined range.

9. Method according to one of the preceding claims,
**characterized in that**
a second safety function is calculated, and the second, increased acceleration a₂ is provided only when the current value of the second safety function lies in a predetermined range.

10. Method according to Claim 8 or 9,
**characterized in that**
one or more of the following variables are evaluated for the calculation of the current value of the first and/or second safety function: speed of the motor vehicle (8), angular speed of the motor vehicle (8), distance from the vehicle (9) travelling ahead, relative speed with respect to the vehicle (9) travelling ahead, yaw rate.

11. Method according to one of the preceding claims,
**characterized in that**
after an intention of the driver to abort overtaking has been detected, the distance from the vehicle (9) travelling ahead is adjusted to the first setpoint distance d₁, and the first acceleration a₁ is provided.

12. Device for carrying out a method for assisting a driver of a motor vehicle (8) during overtaking, comprising sensor means for measuring the distance of the motor vehicle (8) from a vehicle (9) travelling ahead, means for detecting an intention of the driver to overtake, means for detecting the initiation of a lane change, and control means for adjusting a distance from the vehicle (9) travelling ahead, wherein the control means are configured to carry out the method according to one of the preceding claims.

## Revendications

1. Procédé destiné à assister un conducteur d'un véhicule automobile (8) lors d'une manoeuvre de dépassement, selon lequel :
une distance du véhicule automobile (8) par rapport à un véhicule qui précède (9) est régulée automatiquement à une première distance de consigne d₁ en fournissant une première accélération a₁, et
après la détection d'une intention de dépasser du conducteur à un instant de départ tₛ, la distance par rapport au véhicule qui précède (9) est régulée à une deuxième distance de consigne d₂, inférieure,
après la détection de l'intention de dépasser du conducteur, une deuxième accélération a₂ accrue étant fournie,
la deuxième accélération a₂ accrue n'étant fournie que si l'initiation d'un changement de voie est détectée à l'intérieur d'une période Δt pouvant être prédéfinie après l'instant de départ tₛ,
la deuxième accélération a₂ accrue étant fournie immédiatement après la détection de l'initiation du changement de voie,
**caractérisé en ce que**
la deuxième accélération a₂ accrue qui est fournie après la détection de l'initiation d'un changement de voie est fournie au maximum pendant un intervalle de temps Δtₐ et ensuite la première accélération a₁ est de nouveau fournie.

2. Procédé selon la revendication 1, **caractérisé en ce que** si aucune initiation d'un changement de voie n'a été détectée à l'intérieur de la période Δt pouvant être prédéfinie après l'instant de départ tₛ, la distance par rapport au véhicule qui précède (9) est de nouveau régulée à la première distance de consigne d₁.

3. Procédé selon la revendication 1 ou 2, **caractérisé en ce que** la deuxième accélération a₂ accrue est fournie pendant l'intervalle de temps Δtₐ au maximum une fois pendant la période Δt après l'instant de départ tₛ.

4. Procédé selon l'une des revendications précédentes, **caractérisé en ce que** des premiers indicateurs servant à la détection d'une intention de dépasser sont acquis, les premiers indicateurs comprenant l'actionnement de l'indicateur de changement de direction dans une direction prédéfinie.

5. Procédé selon l'une des revendications précédentes, **caractérisé en ce qu'**une intention de dépasser du conducteur n'est détectée que si la vitesse du véhicule automobile (8) est supérieure à une valeur limite pouvant être prédéfinie, de préférence supérieure à 50 km/h ou à 65 km/h.

6. Procédé selon l'une des revendications précédentes, **caractérisé en ce que** des deuxièmes indicateurs servant à la détection d'une intention de dépasser sont acquis, les deuxièmes indicateurs comprenant une ou plusieurs des grandeurs suivantes : angle de braquage, vitesse angulaire de braquage, intégrale de temps de l'angle de braquage, taux de lacet, accélération latérale du véhicule automobile (8).

7. Procédé selon l'une des revendications précédentes, **caractérisé en ce que** l'initiation d'un changement de voie n'est détectée que si l'indicateur de changement de direction est activé.

8. Procédé selon l'une des revendications précédentes, **caractérisé en ce qu'**une première fonction de sécurité est calculée et **en ce que** la distance par rapport au véhicule qui précède (9) n'est régulée à la une deuxième distance de consigne d₂ inférieure que si la valeur actuelle de la première fonction de sécurité se trouve dans une plage prédéterminée.

9. Procédé selon l'une des revendications précédentes, **caractérisé en ce qu'**une deuxième fonction de sécurité est calculée et **en ce que** la deuxième accélération a₂ accrue n'est fournie que si la valeur actuelle de la deuxième fonction de sécurité se trouve dans une plage prédéterminée.

10. Procédé selon la revendication 8 ou 9, **caractérisé en ce qu'**une ou plusieurs des grandeurs suivantes sont interprétées pour le calcul de la valeur actuelle de la première ou de la deuxième fonction de sécurité : vitesse du véhicule automobile (8), vitesse angulaire du véhicule automobile (8), distance par rapport au véhicule qui précède (9), vitesse relative par rapport au véhicule qui précède (9), taux de lacet.

11. Procédé selon l'une des revendications précédentes, **caractérisé en ce qu'**après la détection d'une intention d'interrompre le dépassement du conducteur, la distance par rapport au véhicule qui précède (9) est régulée à la première distance de consigne d₁ et la première accélération a₁ est fournie.

12. Dispositif pour mettre en oeuvre un procédé destiné à assister un conducteur d'un véhicule automobile (8) lors d'une manoeuvre de dépassement, comprenant des moyens de détection destinés à détecter la distance du véhicule automobile (8) par rapport à un véhicule qui précède (9), des moyens destinés à détecter une intention de dépasser du conducteur, des moyens destinés à détecter l'initiation d'un changement de voie et des moyens de commande destinés à réguler une distance par rapport au véhicule qui précède (9), les moyens de commande étant conçus pour mettre en oeuvre le procédé selon l'une des revendications précédentes.
